# EUROPEAN PATENT SPECIFICATION

(11) **EP 2 215 320 B1**
(45) Date of publication and mention of the grant of the patent: **22.06.2016**
(21) Application number: 08845265.1
(22) Date of filing: 01.11.2008
(51) Int. Cl.: E04H 12/12, E04H 12/16, E04H 12/34, F03D 1/00

(54) **SEGMENTED CONCRETE TOWER FOR WIND POWER GENERATORS AND METHOD OF ERECTING THEREOF**
SEGMENTIERTER BETONTURM FÜR WINDENERGIEGENERATOREN UND ERRICHTUNGSVERFAHREN DAFÜR
PROCÉDÉ DE MONTAGE D'UNE TOUR SEGMENTÉE EN BÉTON PRÉCONTRAINT POUR GÉNÉRATEUR ÉOLIEN ET TOUR

(30) Priority: 02.11.2007 WO PCT/IB2007/003319
(43) Date of publication of application: 11.08.2010
(73) Proprietor: Cortina-Cordero, Alejandro, Mexico, D. F. 01330 (MX); Cortina-Ortega, Jose Pablo, Mexico, D. F. 01330 (MX); Cortina-Cordero, Jose Pablo, Mexico, D. F. 01330 (MX)
(72) Inventor: Cortina-Cordero, Alejandro, Mexico, D. F. 01330 (MX); Cortina-Ortega, Jose Pablo, Mexico, D. F. 01330 (MX); Cortina-Cordero, Jose Pablo, Mexico, D. F. 01330 (MX)
(74) Representative: Klocke, Peter
(86) International application number: PCT/IB2008/002928
(87) International publication number: WO 2009/056969

(56) References cited:
- EP-A- 1 767 729
- WO-A-03/069099
- DE-A1- 19 936 603
- DE-U1-202007 003 842
- US-A1- 2006 156 681

## Description

### BACKGROUND OF THE INVENTION

### Field of the Invention

This invention relates to a method for mounting a segmented pre-stressed concrete tower for wind power generators and tower for wind power generators.

### Description of the Related Art

Towers of several designs have been proposed for wind-power generators. For example, several different towers have been built, having structures based on metallic armatures; also, they have been built with tubular sections. In both cases, their height is limited because of their dimensions, the turbulence caused by the air, their strength against intense earthquakes, and their ease of building, because in many cases it is not practical for the heights presently used. Towers made of concrete using sliding formworks are also known. For example the tower of Mathis US-5,109,953. According to such techniques, the tower is built by pouring concrete on formworks placed on the structure.

Other well-known concrete structures are made of prestressed concrete. Prestressed concrete is a technique using pre-stressing tendons -generally of high tensile steel cable or rods- to provide a clamping load which produces a compressive stress that reinforce the concrete structure. The pre-stressed concrete encompasses pre-tensioned concrete -wherein concrete is cast around already tensioned tendons-, and post-tensioned concrete, wherein the concrete is cast around a duct and after the curing process, compression is applied through pre-stressing tendons introduced within such ducts.

EP-A-0 960 986 ARAND, describes a sectioned pre-stressed concrete tower for wind-power generators. According to this publication, prefabricated truncated conical sections are mounted using a crane to form the tower and joined together through post-tensioning tendons. According to the publication, towers of two hundred meters' height, or more, can be erected in this way. WO-2004/007955 WOBBEN, from ENERCON, discloses a construction system for conical sectioned towers. This publication describes the controlled manufacture of each concrete section. The concrete section includes a series of ducts for pre-stressing. According to WINDBLATT, THE ENERCON MAGAZINE, Huge Building Blocks, exemplar 03/2001, September 22, 2201, pages 8-9, it is stated that due to their dimensions, the first pre-cast sections are divided in halves. The main drawback of the ENERCON tower is that the sections are big and heavy and so that, difficult to handle. For mounting it requires of expensive high capacity cranes. In addition if the sections are made according to Arand, some different formwork or molds parts are required for molding each tower section.

WO-2003069099 (& US-7,160,085 & EP-1 474 579) assigned to MECAL discloses a hybrid tower for wind power generators comprising: (a) a lower portion made of a sectioned (tower divided in sections) segmented (sections divided in segments) annular pre-stressed concrete structure and an upper metallic tubular portion.

The tower of MECAL has many drawbacks, which do not allow enabling such tower. The tower requires very complex joints for joining the segments -see figures 13a -d WO-2003069099-. It should be noted that segments of 12 meters height and some tones weight can be easily built at the floor level; however at 30 meters height it is not easy to joint the parts with the required precision. In addition, the MECAL joint must be cemented which makes the erection more complex. In addition, the segments are made using different molds and it is feasible that the segments cannot coincide. Furthermore, pre-stressing in the inner side of the tower -as suggested by MECAL-is non recommendable since it produces weakness in the tower. Bolt connections for joining the concrete segments are also non recommendable since any movement of the tower -an earthquake, for instances- produce movement in the tower segments that can destroy such bolts. In addition, according to the description, the erection of the tower is supposed to be reach by the use of a climbing crane. The use of such crane is not technically possible. However, assuming that such use is possible, it requires that the tower be over-designed in order to support its own weight as well as the weight of cranes and the upper concrete segments to be mounted. Each segment having a weight of some metric tons.

CONCRET & STEEL (WO-2006111597 & EP-1 876 3161 & ES2246734) a subsidiary of GAMESA EOLICA, and INNEO (US-2006156681 & ES-1058539U) a subsidiary of ACCIONA EOLICA both disclose a cylindrical tapered tower, similar to the MECAL tower. The description of such towers does not include the mounting method. It is probably that the concrete sections are assembled from segments at the floor level and then the complete sections are mounted using a high capacity crane under the ENERCON teachings.

DE 20 2007 003 842 U1 discloses the sub-structure of a hybrid tower having three flat walls and tree rounded walls, alternated and joined together to form the structure, a triangular cross-section with rounded vertices, such that the tower gradually narrows, and a plurality of stepped and stacked pyramidal sections assembled from flat concrete segments and circular concrete segments. The document does not describe, how the segments are fixed to each other and how the tower is erected. This document forms the closest prior art.

EP 1 767 729 A1 discloses a wind tower construction with rounded segments being connected to a tube element by a peripheral annular bracing. The union of adjacent segments is reached by a joint filling material introduced in horizontal joints, which include a locking connection including a groove and a shaped part and also a filling material. The horizontal joints can also be formed analogously to the vertical joints. The tube elements are stacked to a tower vertically fixed by tension elements.

Summarizing, the segmented concrete conical towers of the prior art, each share the following drawbacks:
a) The ENERCON, MECAL, CONCRETE & STEEL and INNEO towers have a circular cross-section and tapered. It is to say that the lower part has a higher diameter than the top of the tower. Such design requires one mold for each segment. Because there are a number of different molds, the joining of the pieces is a difficult factor, requiring complex devices to accomplish such joining.
b) Furthermore, in the case of MECAL, the concrete segments are manufactured in a facility and then transported to the building site. Because of their sizes, such segments are big and heavy. The transportation to the site of these pre-fabricated segments, which can weigh more than 60 metric tons, must be carefully planned, using thereby big cranes and flatcars adequate for their size.

With respect of the mounting methods of segmented concrete towers of the prior art, they share the following drawbacks:
a) In the case of ENERCON, CONCRETE & STEEL and INNEO towers, the erection of these sections must be done with very expensive large-capacity cranes, able to lift complete concrete tower sections, and using very high scaffolds, which influences the cost of said erection.
b) In the case of MECAL, which supposed to use a climbing crane, the concrete tower must be over dimensioned in order that the lower sections support the weight of the crane and the upper segments. Furthermore, by the use of such method it is not possible to reach the required precision joint of adjacent concrete segments.

### SUMMARY OF THE INVENTION

It is therefore an object of the present invention to provide a pyramidal tower for wind power generators having an improved strength with a facilitated erection.

This object solved by a tower as claimed. Accordingly the tower comprises concrete legs, formed from cylindrical or curved prestressed concrete segments, using one mold and using tapered flat pre-cast trapezoidal panels, having a wider lower edge and a narrower upper edge to produce a gradual reduction in the cross-section of the tower, thus simplifying their fabrication and erection.

The erection of a segmented tower is simplified through the use of a sectionalized erecting column, installed at the tower's axis, whose purpose is to maintain the geometry of the tower when the different portions are erected, by supporting or leaning them to said erecting column.

This same erecting column serves as a staircase during the tower building, for safely accessing the working sites, during the erection.

The erecting column has, as accessories, work-platforms or scaffolds, advantageously installed where they are needed to perform pre-stressing. This sectionalized erecting column can be removed when the erection process is finished or can remain as an access way to the nascelle when the wind power generator is on operation, for example for providing maintenance.

The structural integrity of the tower is achieved by means of pre-stressing tendons, vertical pre-stressing tendons which attach the overlying adjacent segments to the foundation and horizontal pre-stressing tendons to join lateral adjacent segments.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the appended claims will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus, are not limitative of the present invention, and wherein:
Fig. 1 illustrates the building process for a pyramidal tower, according to an embodiment of the present invention.
Fig. 2 shows the pre-fabricated curved segments and the prefabricated flat segments in a stack.
Fig. 3 shows a pre-fabricated curved segment with its ducting for allocating pre-stressing tendons.
Fig. 4 shows a flat segment viewed from the interior, which shows integrated reinforced concrete ribs.
Fig. 5 shows the foundation and the first erecting column section.
Fig. 6 shows the first two segments leaned to the erecting column section, and a working platform or scaffold supported by the erecting column section.
Fig. 7 shows the completion of the first section of the tower.
Fig. 8 shows the erection of the tower's second section, at a greater height.
Fig. 9 shows the addition of another section of the erecting column, for continuing the erection of the tower.
Fig. 10 shows an erected pyramidal tower.
Fig. 11 shows a top view of the pyramidal tower of Fig. 10.
Fig. 12 illustrates the setup of the erection column sections.
Fig. 13 shows the pre-stressing tendons web into the prefabricated segment ducts.
Fig. 14 shows the erection of the extension body.
Fig. 15 illustrates a finished wind power generator.

### DETAILED DESCRIPTION OF THE INVENTION

This application relates to a concrete tower for wind-power generators, particularly pre-stressed sectioned and segmented concrete tower for wind power generators, and its mounting method, the tower includes a pyramidal structure formed of concrete legs and concrete joining walls. The concrete legs are formed from prefabricated concrete curved segments (hereinafter curved segments) whilst the concrete joining walls are formed from prefabricated or pre-cast concrete joining segments (hereinafter joining segments).

The curved segments are piled up, to form concrete legs. The curved segments forming concrete legs are joined together with the joining segments, to form tower sections of variable cross-sections that allow the tower to be erected. The tower ends in a circular section at its upper end. The curved segments and the joining segments are joined together and attached to a foundation by pre-stressing tendons. The prefabricated curved and the joining segments, because of their size, are preferably fabricated on-site, thus avoiding the need to be transported.

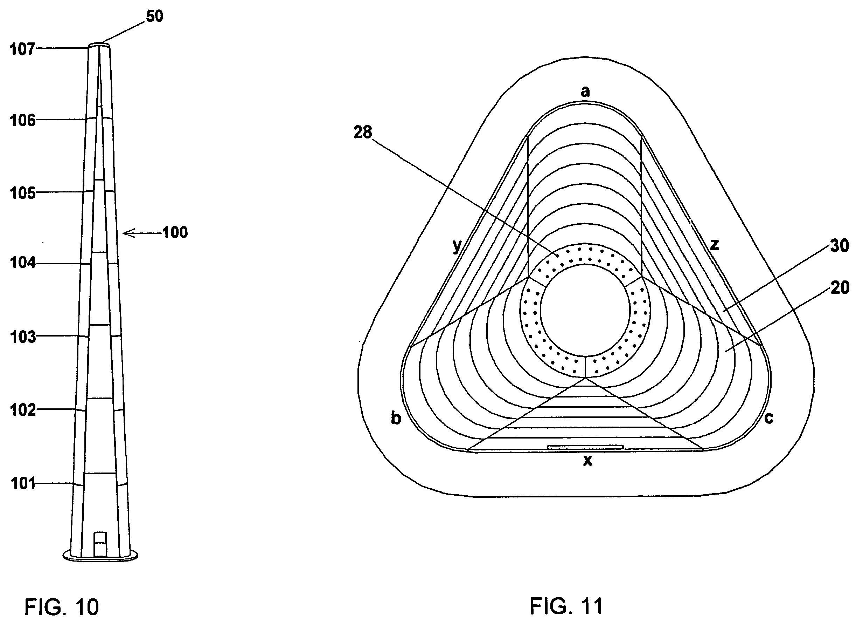

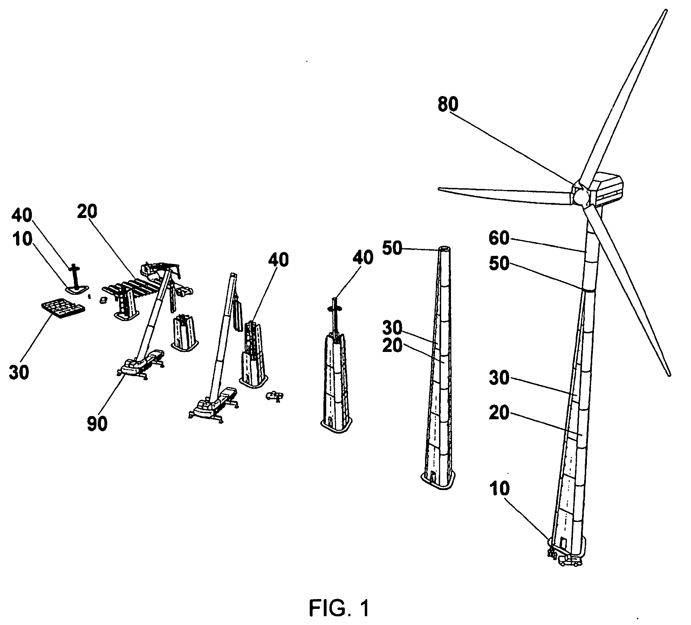

According to the invention, depicted in Fig. 1 and Fig. 11, the curved segments are designed in such way that at the top such segments forms a circular ring. Thus, if the tower is of a triangular cross-section having three concrete legs, the curved segments are of an angle of 120°. Such angle is 90° is the cross section is square with four concrete legs.

According to the invention depicted in Fig. 1, such joining segments of the concrete flat joining walls consist of concrete joining segments having a form of a truncated triangular (or trapezoidal) slab with a lower wide edge and an upper narrow edge. However, according to another embodiment of the invention, such joining segments cannot be flat but trapezoidal curved concrete ribbed segments. Furthermore, the concrete joining segments cannot include ribs and/or the concrete curved segments can include ribs.

The curved segments are joined to themselves through the joining segments, of a trapezoidal form, in order to form the variable cross-sectioned tower, its upper part being capped by a circular ring.

The segmented post-tensioned concrete tower for wind power generators is characterized by the ease of its geometric conception, the curved segments are based on a cylindrical form (constant diameter) split into three equal circular sectors arranged as a tripod to form concrete legs joined to concrete joining walls to form a pyramidal structure; they have the double objective of using only one standard curved mold. The joining segments, which complement the tower section, are preferably horizontally fabricated on a concrete template.

The constructive development for the preferred embodiment of the tower, designed in order to have a reinforced and pre-stressed concrete structure in a unique, rapid and economical way, includes a tower body 100 having a plurality of pre-fabricated concrete segments including (i) prefabricated curved segments 20, made of concrete, and (ii) prefabricated joining segments 30, also made of concrete. The tower is slender, having an aesthetic appeal without impairing the structural properties necessary for supporting the loading to which it will be subjected, such as its own weight, the weight and movement of the blades, wind thrust, seismic forces, etc. It has been found that a tower of a triangular cross-section provides an improved resistance to the horizontal loads when compared with towers of square or circular cross-section.

The height of the structure above the ground can vary, according to the type of power generator being used. The tower's geometry is dimensioned and controlled in order to comply with all extreme conditions of the service, and the ultimate limits in the various current building codes.

According to the present invention, a tower is described comprising a body 100 comprising a structure formed by prefabricated curved segments 20, of reinforced- and pre-stressed (post-tensioned) concrete, combined with prefabricated joining segments 30. The cross section of the tower's body 100 decreases as a function of its height.

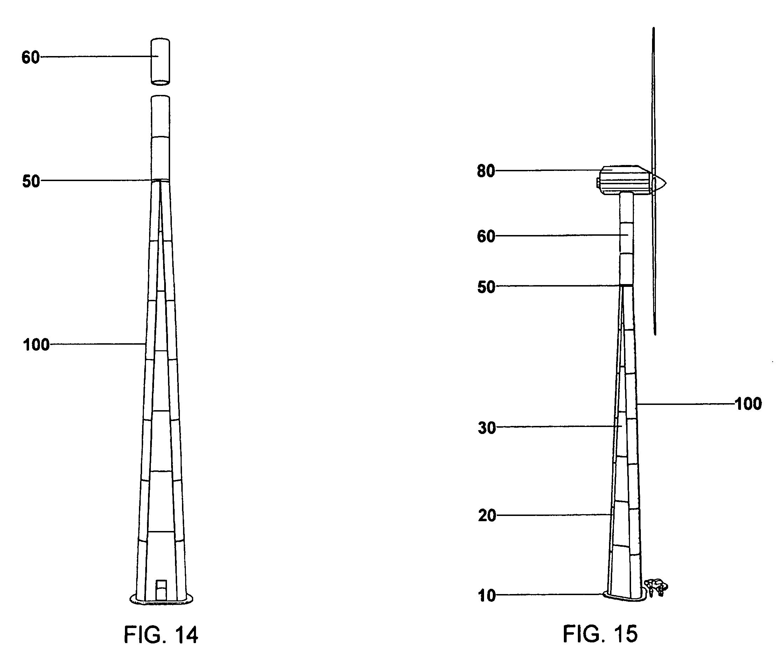

In another embodiment of the invention depicted in Fig. 14 and 15, the tower comprises, as seen from a side, two sections distinguishable from each other by their geometry: a lower pyramidal body 100 having a variable cross section from its base to approximately two thirds of its height, and an upper extension body 160, preferably having a cylindrical cross-section of constant diameter, which approximately forms one third of the total height of the tower.

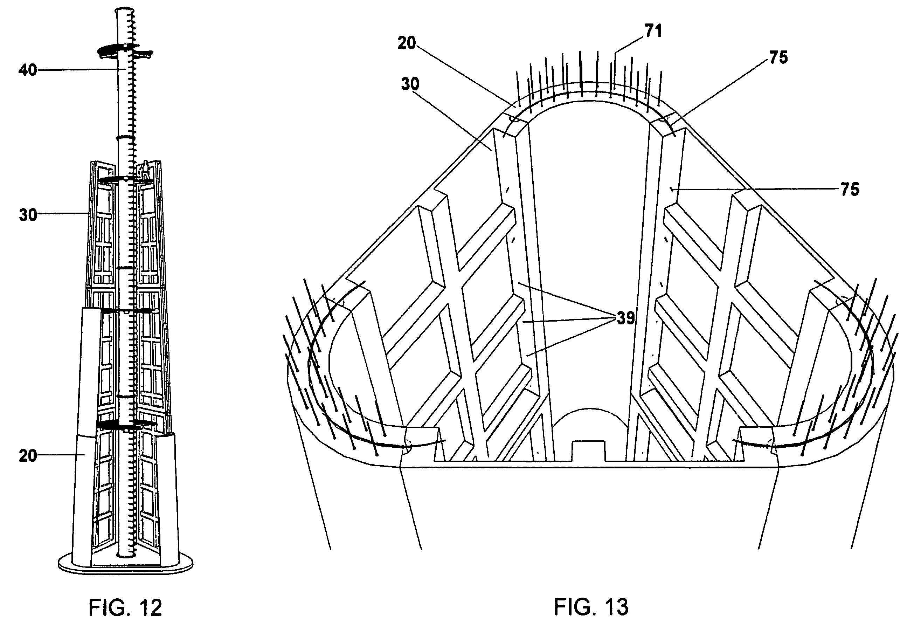

In the embodiment of the invention, illustrated in Figs. 11 and 13, the body 100 of the tower has an axi-symmetrical cross section, whose perimeter can be likened to a triangle with straight sides (x, y, z) and rounded vertices (a, b, c) forming the triangular cross-section of the tower. The triangular cross section of at least a portion of the tower's body decreases as a function of the tower's height, forming a pyramidal structure, as viewed from a side. It is to say, that it thins out as its height increases.

As illustrated in Fig. 11, the tower comprises three segmented flat joining walls "x", "y", and "z", separated in-between, extending between the vertices of the triangular cross section along the tower, forming the concrete joining walls of the tower. Each concrete joining wall comprises a plurality of prefabricated joining segments 30. Whilst each concrete leg comprise a plurality of prefabricated curved segments 20.

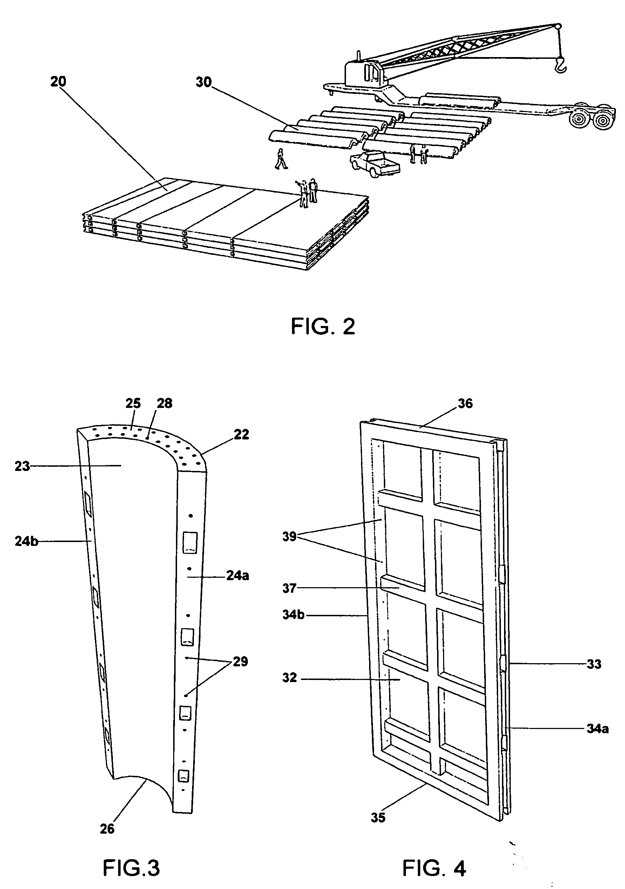

Fig. 4 depicts a joining segment 30 as a flat prefabricated ribbed segment. The ribbed segment has an internal face 32, an external face 33, two long sides 34a, 34b, a bottom side 35, and one upper side 36. Each ribbed segment comprises reinforcing ribs 37. The arrangement of the ribs can be done according to any known method. Preferably, the ribs should extend vertically, horizontally, in crossings, or diagonally and it should also form a framework along the perimeter of the joining segment 30. The joining segments 30 can consist of curved ribbed segments in order to form a circular cross-sectional tower.

Also, the joining segments 30 incorporate horizontal ducts 39 for running horizontal pre-stressing tendons 75 into them. The horizontal ducts 39 of the joining segments 30 are aligned to the corresponding horizontal ducts 29 of the curved segments 20. Through each of these ducts, at least one pre-stressing tendon is introduced and, by the action of the tendon 75, the ribbed 30 and rounded 20 segments remain fixedly and firmly attached, thereby forming a structure, which works as a monolithic structure. In Fig. 13 the horizontal 29, 39 and vertical ducts 28 as well as the pre-stressing tendons 71, 75 are depicted. A portion of horizontal duct 29 is shown, and also a portion of horizontal duct 39 in the ribbed segment 30, before running in the pre-stressing tendons is shown.

According to the invention, each of the joining segments 30 has an elongated- and trapezoidal form, such that the upper side 36 is narrower than the bottom side 35. As depicted in Figs. 10 and 11, the joining segments 30 installed at the uppermost part of the triangular cross section in the tower, are of a triangular form (but not trapezoidal). In this portion of the tower, the cross section of it turns circular, because the curved segments 20 are joined and form a complete circumference.

The joining segments 30 are preferably fabricated at the building site. Thus, substantial savings are obtained by eliminating the need to transport the segments from the shop to the tower building site. However, as will be evident for a person skilled in the art, the joining segments 30 can be shop-fabricated. Also, the shop can be advantageously located very close to the building site.

In the case of use of flat ribbed joining segments, are advantageously employed molds, which limit the periphery of segments and ribbings. The flat segments are molded by pouring and curing concrete in layers, over a concrete hardstand or template (Fig. 2). Between layers, a mold releaser is inserted, which prevents the flat segments from sticking together. For convenience, first the flat segments corresponding to the upper sections in the tower are manufactured by pouring and curing; then, the segments for the intermediate sections and finally, the segments for the bottom sections are formed. This way, the flat segments will be lifted and mounted by a crane as the building of the tower proceeds, without needing to move the flat segments, which have already been cast and lie in the lower layers.

Before pouring the concrete, it is possible to include attachments to the flat segments for allowing, for example, ducting for electrical installation. Also, the ducts for the pre-stressing tendons are incorporated.

As it will be apparent from the figures, the joining segments 30 are mounted with their ribbing facing towards the tower's interior, while the smooth face forms the exterior surface of the tower. However, the ribbed face of the flat segments can be selected to be the external surface of the tower.

The tower comprises three concrete legs, "a", "b", and "c", separated from each other, extending along the tower in the vertices of the triangular section, between flat joining walls "x', "y", and "z", and joined to them. Every concrete leg consists of a plurality of prefabricated curved segments 20, made of concrete that are stacked vertically and post-tensioned.

As will be apparent in Figs. 10 and 11, at the vertices of the tower's triangular cross-section, the concrete legs are mounted, between the joining segments 30 which extend along the body 100 of the tower.

The decrease in the tower's cross section is achieved by gradually reducing the width of the flat joining walls "x", "y", and "z" made of joining segments 30, but without modifying the dimension of the curved segments 20, until the curved segments 20 converge forming a circular ring. See Figs. 10, 11. Also, the tower optionally includes a ring 50, the ring having the task of uniformly distributing the vertical loads onto the concrete legs.

The curved segments 20, forming the concrete legs of the tower, are pre-fabricated and erected on-site. According to the present invention, the curved segments 20 are foreseen having the same dimensions and form. Their form is that of a circular cylinder segment of 120°. This approach, in contrast to towers built according to prior art, does not require special molds to manufacture each segment for the tower.

According to an embodiment, only one type of mold can be used to fabricate all curved segments 20. Due to the fact that a section is formed from six segments, the weight of the concrete segments approximately 1/6 of the total weight of a complete section. Thus, for mounting the segments it is required a crane of approximately 1/6 of the capacity required when complete sections -segmented or not- are mounted under the teachings of the prior art. Such a difference in weight allows a safer and easier erection of the prefabricated curved segments and requires a less expensive crane. Such feature is also beneficial for off-shore applications. However as it could be evident for a person skilled in the art, it can be used a big capacity crane for mounting bigger segments. Thus a tower usually made in 12 sections can be built in 5 or 6 sections.

Fig. 3 illustrates a curved segment 20. The segment has an external face 22 and an internal face 23, and has two lateral edges 24a, 24b of a suitable thickness. Also, the curved segments 20 have an upper or top side 25, and a bottom side 26, along the surface of the segment 20, parallel to the edges 24a, 24b there is a plurality of horizontal ducts 29 and vertical ducts 28, for introducing the pre-stressing cables 75. Into the horizontal ducts 29 of the curved segments 20, and into the horizontal ducts 39 of the adjacent joining segments 30, pre-stressing cables 75 are introduced and secured, for joining the curved segments 20 to the adjacent joining segments 30. Also, into the vertical ducts 28 of curved segments 20, the pre-stressing tendons 71 are introduced, for joining the overlying and underlying curved segments in order to form the concrete legs. The vertical 71 and horizontal 75 pre-stressing tendons are introduced and secured by means and methods well known to those skilled in the art.

The pre-stressing tendons are selected from pre-stressing cables or pre stressing-strands made of high tensile steel; or rods or any suitable pre-stressing element, anchored to the tower's foundation, which are installed and post-tensioned inside the curved segments in order to provide the continuity of the concrete legs. Fig. 13 illustrates the pre-stressing elements for one section of the tower, according to the present invention.

Sidewise, the curved segments 20 are connected to the joining segments 30 by vertical pre-stressing cables, thus allowing to operate as an integral-or monolithic section. To that end, the curved segments comprise horizontal ducts which are aligned to corresponding ducts in the joining segments 30.

Once the tower is built and is operating, the concrete legs provide resistance against vertical loads, mainly the loads due to the tower own weight and nascelle weight whilst the combination of curved and flat segments provide the resistance against the horizontal loads mainly due to the movement of the wind power generator blades, the wind thrust and seismic forces.

For the construction of a tower according to present invention, the cylindrical segments of the extension can be fabricated simultaneously to the erection of the tower, being lifted at the proper time by means of a crane, laid on the tower, and fastened to it by mean of pre-stressing tendons, such as cables or strands, which are laid, ducted and post-tensioned inside the prefabricated concrete segments, in a way known to an person skilled in the art.

The molds for cylindrical segments are conditioned, thus incorporating columns for pre-stressing cables or strands and other attachments, and then a vertical pouring of concrete is done; the molds can be stripped the next day. Thus, the molds are used every other day. The quantity of molds is unlimited, and the number of units to be used depends on the magnitude of the construction and on its building schedule.

According to the present invention, a considerably lower quantity of molds can be used, in contrast to those used in the building methods for circular tapered stack-type towers according to the prior art.

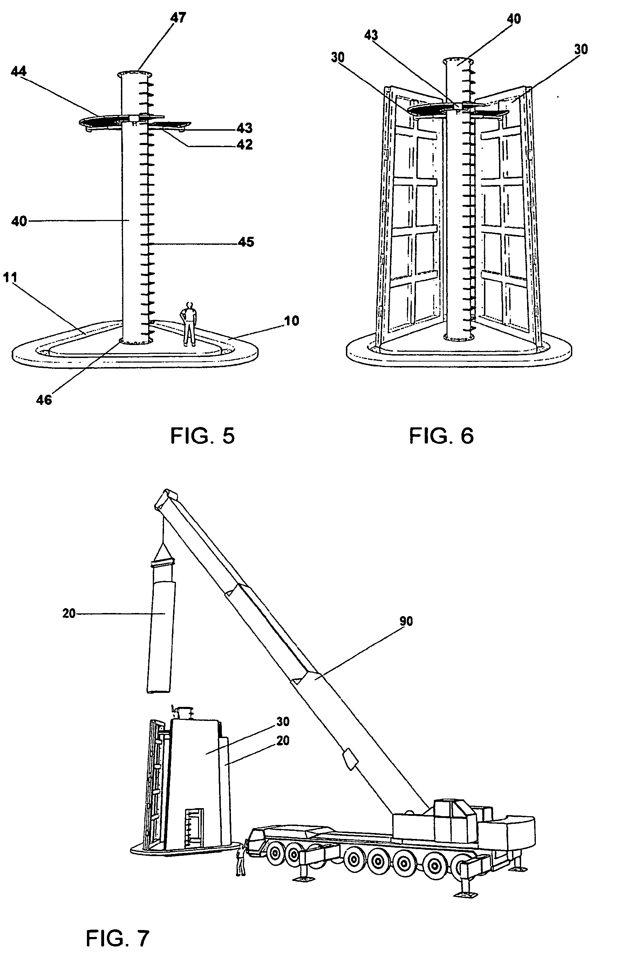

According to the present invention, in the erection of the tower a sectionalized erecting column is used, advantageously installed in the tower's interior. The sectionalized erecting column includes a plurality of vertically disposed erecting column bodies or sections 40, said bodies having an axis, and upper and lower ends. Said bodies or sections 40 being stacked one above the other, during the erection of the tower as depicted in Fig. 5. Each erecting column sections include stair treads 45 to climb, and at least one scaffold or working platform 44 for the building personnel.

As is apparent in Figs. 5 and 6, each section 40 of the column has at least radial arms 42, axially extending outwards from the surface of the column. The arms 42 are retractable, in such a manner that they can be retracted to allow the removal of the erection column through the upper part of the tower, before the nascelle 80 is installed.

Said retractile arms have a proximal edge and a distal edge. Each radial arm has, on its distal end from the erection column's section, a mounting plate 43, such that when laying a ribbed segment 30, it can be supported on the plate. Also, the scaffold 44 lies over the arms 42, so that the construction people can maneuver during the assembly of the segments. The proximal end of the arms is attached to the column by welding or any well know technique. The use of three radial arms is preferred. Furthermore, the scaffold is supported by the retractile arms.

Fig. 5 and 6 depicts that the flat segments can be leant on the erecting column. However, the erecting column can advantageously comprise radial arms for leaning the curved segment. A scaffold at different height of the section allows the construction workers to perform post tension of the horizontal tendons in order to join adjacent concrete segments.

The tower of the present invention does not include any cemented joint. The concrete segments are joined only through pre-stressing means.

The number of radial arms depends on the number of concrete segments which constitutes the tower section. Thus according to the embodiment shown in the drawings, a section comprises six segments. However, as it is clear for a skilled in the art, the number of segments can be higher or lower, for example, a section of a pyramidal tower of four flat sides comprise eight concrete segments, whilst a circular tapered tower of the prior art comprises four rounded segments or more.

Fig. 5 and 6 depicts an erecting column section comprising one set of radial arms and one scaffold; however the erecting column may have a second or third set of radial arms and scaffolds. The concrete segments may include metallic inserts to engage with the retractile arms and means for extending or contracting the arms length in order to tilt the concrete segment to put it in the right way with the precision required.

Also, each erection column section 40 has a bottom connector 46 at the lower end of the column section 40, for joining said erection column section 40 with the foundation or with a subjacent section 40, and a top conector 47 at the upper end of the column section 40 for joining the erection column section 40 to an upper-adjacent column section 40, in order to be laid over a previously installed one. The connectors are selected from flanges or welding connections or any other suitable mean.

The erecting column under the present invention can also be made of pre-stressed concrete such as a pole or pile, firmly joined to the foundation to support the concrete segments which conforms the tower.

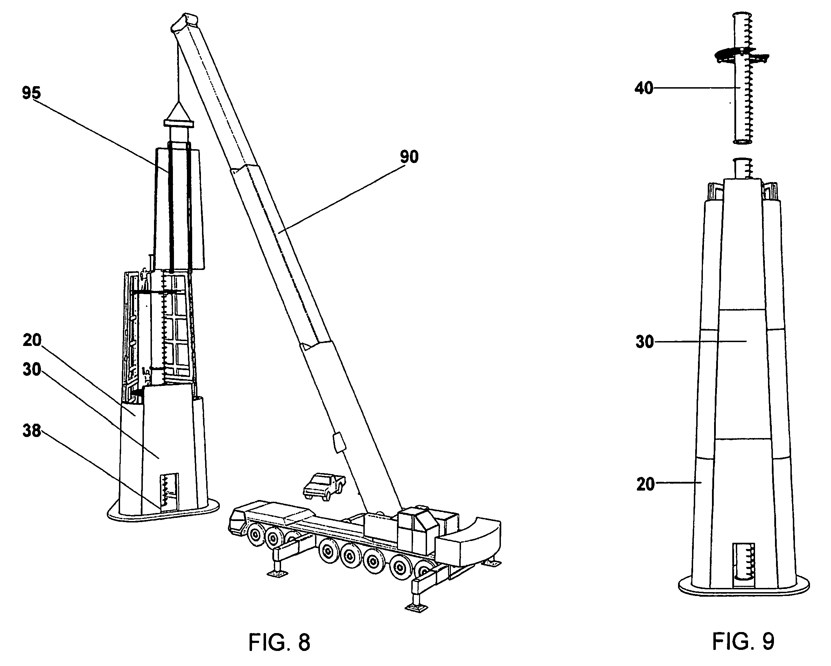

The concrete segments manufactured by pouring concrete on molds of the concrete curved segments 20, as well as the joining segments 30 in the case of a triangular cross-sectional tower, and the extension cylindrical segments 60, is preferably done on-site, according to following process, which is illustrated in Fig. 1. The erecting method comprises the following steps:
(a) to build one foundation for the tower;
(b) to fabricate, at tower's building site or at a shop, a plurality of pre-fabricated concrete segments these pre-fabricated elements having internal ducts vertical and horizontal for introducing pre-stressing cables (Figs. 2, 3 and 4) and accesories;
(c) to fabricate a plurality of erecting column sections, having arms that radially extends from the column's axis, for proving a support to the concrete segments;
(d) on the tower's foundation, to install the first erecting column section, which will serve for all erection purposes (Fig. 4);
(e) to install, with a crane, a first concrete segment, of the ones which together form the first section of the tower, fix it on the foundation and leaning it on the erecting column, and tilt and mount the segment in its final position, through the erecting column's arms (Figs. 5 and 6);
(f) to install the remaining concrete segments of the tower's first section, according to the same routine as for the first concrete segment;
(g) to join the adjacent lateral concrete segments through prestressing tendons to provide a rigid concrete tower section.
(h) once the first section of the tower is finished, the second erection column section 40 is installed (Fig. 8), and the corresponding concrete segments are mounted to form the second section of the tower. The adjacent vertical segments are joined through pre-stressing tendons to provide rigidity to the tower sections which form the tower.

The sequence is repeated to form the third and following sections of the tower (Fig. 9). Fig. 10 illustrates a finished body of the tower, having seven sections 101, 102, 103, 104, 105, 106 and 107. In a section of the tower, the concrete legs of the tower can be formed for one or more curved segments. Thus, in one embodiment of the invention, consisting of a pyramidal triangular tower, one tower section comprises three flat segments and three curved segments. In another embodiment, of the invention, consisting of a pyramidal triangular tower, one tower section comprises three flat segments and nine curved segments. Thus, the height of the curved segments is around 1/3 of the flat segments. It is preferred that the flat segments be higher than the curved segments, thus providing an step which advantageously allows joining the flat segments of the first section with the curved segments of the upper section and/or lower section (in the intermediate sections, as shown in Fig. 10.

The joining segments of section 107 depicted in Fig. 10, consist of concrete slabs triangular in shape but not trapezoidal, since at the top member 100 the curved sections converge in a ring. Evidently, the number of tower sections depends on the tower's height and of the dimensions of the flat segments; thus, the number of sections and the number of flat and curved segments for each section depends on the tower's design, as will be evident to a person skilled in the art. All of such possible designs are included within the scope of present invention.

Both the curved and flat concrete segments are prefabricated in units, suitable for their mounting, joined together and to the foundation by means of pre-stressing tendons. Figs 11 and 12 show the tower according to the invention, in an elevation view and a partial vertical section, to show the components, and in a view from above.

According to the invention, which is illustrated in Figs. 14 and 15, the tower includes an extension. Preferably, the tower extension includes a cylindrical body. The cylindrical portion is made of a cylindrical segmented piece made of concrete, which joins to the ring 50. Also, according to the invention, the upper end of the cylindrical extension comprises one ring (no illustrated), which serves as a flange to support the nascelle 80.

The extension includes a plurality of cylindrical sections 60, made of pre-stressed concrete, joined together by pre-stressing elements such as cables or strands, installed and post-tensioned within the ducts of said cylindrical modules (not illustrated). The hybrid towers for wind generators of the prior art usually comprises extensions made of metal, such hybrid towers include such metallic extension in order to absorb the vibration of the tower that can came into resonance and collapse the tower. The vertical and horizontal pre-stressing produce a tower having mechanical properties as a monolithic structure such tower cannot collapse by the vibration of the nascelle and horizontal loads due to wind. Thus, the cylindrical extension of the tower can be preferably made of concrete. A cylindrical concrete extension provides improved strength with regard to the metallic extension.

According to an embodiment of this invention, the cylindrical sections 60 which form the extension are foreseen as having equal dimensions. In this way, only one type of cylindrical mold is required. As will be evident to a person skilled in the art, one physical mold is not exclusively used, but a plurality of molds having the same characteristics. The molds can be used to fabricate and erect several towers in a wind power energy farm.

The use of the sectionalized erecting column is particularly useful for off-shore applications. The sea waves produce a movement in the crane-ships and concrete segments which difficult the erection of a segmented concrete tower.
As it is obvious for a skilled in the art, the segmented pre-stressed annular tower can be used as a chimney.

## Claims

1. A concrete tower for wind-power generators, comprising:
a. a pyramidal structure (100) having three segmented flat walls (x, y, z) and three segmented rounded walls (a, b, c), alternated and joined together to form a structure,
b. the pyramidal structure (100) having a triangular cross section with rounded vertices, such that the tower gradually narrows and ends into a circular cross section,
c. the pyramidal structure (100) having a plurality of stepped and stacked pyramidal sections (101-107) assembled from flat concrete segments (30) and circular concrete segments (20),
**characterized in that**
d. the tower is pre-stressed, whereas
the flat concrete segments (30) and the circular concrete segments (20) which form each pyramidal section (101-107) are joined together through horizontal pre-stressing cables (75) being provided within horizontal ducts (29, 39) that are respectively embedded into the circular and flat concrete segments (20, 30); and
the pyramidal sections (101-107), are joined together through vertical pre-stressing cables (71) being provided within vertical ducts (28) that are embedded into the circular concrete segments (20), and
e. the tower further comprising an extension, having cylindrical sections (60) made of pre-stressed concrete joined together by pre-stressing cables being provided within vertical ducts that are embedded into the cylindrical sections (60).

2. The pre-stressed concrete tower according to Claim 1, characterized that the circular concrete elements (20) have substantially the same form and the same dimensions.

3. The pre-stressed concrete tower according to Claim 1, characterized that the flat concrete segments (30) have a bottom side wider than a top side.

4. The pre-stressed concrete tower according to Claim 3, **characterized that** the flat concrete segments (30) comprises ribs (37), that form a framework.

5. The pre-stressed concrete tower according to Claim 1, **characterized that** horizontal ducts (29) in the flat concrete segments (30) extend through the width of a ribbing forms a framework.

6. The pre-stressed concrete tower according to Claim 1, **characterized that** the circular concrete segments (20) comprise vertical ducts (28) for joining together said stepped and stacked pyramidal sections (101 -107) with pre-stressing cables (75) being provided within the vertical duct (28).

7. The pre-stressed concrete tower according to Claim 1, **characterized by** an internal removable structure, having a column (40) with treads (45) for climbing and scaffolds (44).

## Patentansprüche

1. Turm aus Spannbeton für Windkraftanlagen, umfassend:
a. eine pyramidenförmigen Struktur (100) mit drei segmentierten ebenen Wänden (x, y, z) und drei segmentierten bogenförmigen Wänden (a, b, c), die wechselweise und miteinander verbunden aufeinander folgen, um eine Struktur zu bilden,
b. die pyramidenförmige Struktur (100) eine dreieckige Querschnittsform mit abgerundeten Eckpunkten aufweist, derart, dass sich der Turm allmählich verjüngt und in einer runden Querschnittsform endet,
c. die pyramidenförmige Struktur (100) eine Anzahl von verstärkenden und gestapelten pyramidenförmigen Abschnitten (101 - 107) aufweist, die aus ebenen Beton-Segmenten (30) und gekrümmten Beton-Segmenten (20) zusammengesetzt sind,
**dadurch gekennzeichnet, dass**
d. der Turm vorgespannt ist, wobei
die ebenen Beton-Segmente (30) und die gekrümmten Beton-Segmente (20), die jeden pyramidenförmigen Abschnitt (101 - 107) bilden, mittels horizontalen Spannkabeln (75) miteinander verbunden sind, die in horizontalen Kanälen (29, 39) verlaufen, die sich in den gekrümmten beziehungsweise in den ebenen Beton-Segmenten (20, 30) erstrecken; und
die pyramidenförmigen Abschnitte (101 - 107), mittels vertikalen Spannkabeln (71) miteinander verbunden sind, die in vertikalen Kanälen (28) verlaufen, die sich in den gekrümmten Beton-Segmenten (20) erstrecken, und
e. wobei der Turm zudem eine Verlängerung aufweist, die von zylindrischen Segmenten (60) gebildet ist, die aus Spannbeton gefertigt und mittels Spannkabeln miteinander verbunden sind, die in vertikalen Kanälen verlaufen, die sich in den zylindrischen Segmenten (60) erstrecken.

2. Turm aus Spannbeton nach Anspruch 1, **dadurch gekennzeichnet, dass** die gekrümmten Beton-Segmente (20) im Wesentlichen ein und dieselbe Form und ein und dieselben Abmessungen aufweisen.

3. Turm aus Spannbeton nach Anspruch 1, **dadurch gekennzeichnet, dass** die ebenen Beton-Segmente (30) eine Unterseite aufweisen, die breiter ist als eine Oberseite.

4. Turm aus Spannbeton nach Anspruch 3, **dadurch gekennzeichnet, dass** die ebenen Beton-Segmente (30) Streben (37) umfassen, die ein Gitter bilden.

5. Turm aus Spannbeton nach Anspruch 1, **dadurch gekennzeichnet, dass** sich horizontale Kanäle (29) in den ebenen Beton-Segmenten (30) durch die Weite von Streben erstrecken, ein Gitter bilden.

6. Turm aus Spannbeton nach Anspruch 1, **dadurch gekennzeichnet, dass** die gekrümmten Beton-Segmente (20) vertikale Kanäle (28) zum Verbinden der verstärkenden und gestapelten pyramidenförmigen Abschnitte (101 - 107) mittels Spannkabeln (75) aufweisen, die in dem vertikalen Kanal (28) verlaufen.

7. Turm aus Spannbeton nach Anspruch 1, **gekennzeichnet durch** eine innere entfernbare Struktur, die eine Säule (40) mit Stufen (45) zum Besteigen und ein Gerüst (44) umfasst.

## Revendications

1. Tour de béton pour générateurs éoliens, comprenant:
a. une structure pyramidale (100) présentant trois parois plates segmentées (x, y, z) et trois parois arrondies segmentées (a, b, c) alternées et jointes les unes aux autres pour former une structure,
b. la structure pyramidale (100) présentant une section transversale triangulaire avec des sommets arrondis, de telle sorte que la tour se rétrécisse graduellement et se termine en une section transversale circulaire,
c. la structure pyramidale (100) comprenant une pluralité de sections pyramidales étagées et superposées (101-107) assemblées à partir de segments de béton plats (30) et de segments de béton circulaires (20),
**caractérisé en ce que**
d. la tour est précontrainte, tandis que:
les segments de béton plats (30) et les segments de béton circulaires (20) qui forment chaque section pyramidale (101-107) sont joints les uns aux autres à travers des câbles de précontrainte horizontaux (75) prévus à l'intérieur de conduits horizontaux (29, 39) respectivement incorporés dans les segments de béton circulaires et plats (20, 30); et
les sections pyramidales (101-107) sont jointes les unes aux autres à travers des câbles de précontrainte verticaux (71) prévus à l'intérieur de conduits verticaux (28) incorporés dans les segments de béton circulaires (20), et
e. la tour comprenant en outre une extension présentant des sections cylindriques (60) constituées de béton précontraint jointes les unes aux autres par des câbles de précontrainte prévus à l'intérieur de conduits verticaux qui sont incorporés dans les sections cylindriques (60).

2. Tour de béton précontraint selon la revendication 1, **caractérisée en ce que** les éléments de béton circulaires (20) présentent sensiblement la même forme et les mêmes dimensions.

3. Tour de béton précontraint selon la revendication 1, **caractérisée en ce que** les segments de béton plats (30) présentent un côté inférieur plus large qu'un côté supérieur.

4. Tour de béton précontraint selon la revendication 3, **caractérisée en ce que** les segments de béton plats (30) comportent des nervures (37) qui forment un cadre.

5. Tour de béton précontraint selon la revendication 1, **caractérisée en ce que** des conduits horizontaux (29) dans les segments de béton plats (30) s'étendent à travers la largeur d'un nervurage formant un cadre.

6. Tour de béton précontraint selon la revendication 1, **caractérisée en ce que** les segments de béton circulaires (20) comprennent des conduits verticaux (28) pour joindre les unes aux autres lesdites sections pyramidales étagées et superposées (101-107) à l'aide de câbles de précontrainte (75) prévus à l'intérieur du conduit vertical (28).

7. Tour de béton précontraint selon la revendication 1, **caractérisée par** une structure interne amovible, comprenant une colonne (40) munie de marches (45) pour l'escalade et d'échafaudages (44).
